# DEMANDE DE BREVET EUROPEEN

(11) **EP 1 052 023 A1**
(43) Date de publication de la demande: **15.11.2000**
(21) Numéro de dépôt: 00401261.3
(22) Date de dépôt: 09.05.2000
(51) Int. Cl.: B05B 1/28, B65D 47/20

(54) **Tête de distribution et récipient ainsi équipé**

(30) Priorité: 10.05.1999 FR 9905918
(71) Demandeur: L'OREAL, 75008 Paris (FR)
(72) Inventeur: Baudin, Gilles, 95330 Domont (FR)
(74) Mandataire: Leszczynski, André

(57) **Abrégé**

L'invention concerne une tête de pulvérisation à fixer sur une tige de commande d'une valve ou d'une pompe, comportant un corps (2) et un obturateur (15) disposé dans un logement (6) dudit corps, ce logement étant apte à communiquer avec une source de produit sous pression lors de l'utilisation.

L'obturateur est agencé pour prendre au repos une position d'obturation dans laquelle il repose par une partie tronconique (16) contre une surface d'appui tronconique (29) dudit corps et est apte à s'écarter de cette surface d'appui (29) sous l'effet de la pression du produit contenu dans ledit logement (6) lors de la distribution du produit, pour former un orifice de distribution annulaire (25) permettant de distribuer le produit sous la forme d'un spray conique et creux, au moins au voisinage de la tête.

L'obturateur s'écarte de la surface d'appui (29) à l'encontre d'une action de rappel élastique tendant à le ramener dans sa position d'obturation, lorsque la pression du produit diminue

## Description

La présente invention concerne une tête de distribution à fixer sur la tige de commande d'une valve ou d'une pompe.

On connaît des têtes de distribution dans lesquelles l'orifice de distribution est ouvert en permanence.

De telles têtes de distribution ne conviennent pas pour distribuer un produit susceptible, en séchant, de former un résidu solide.

On a ainsi proposé des têtes de distribution dans lesquelles l'orifice de distribution est fermé en dehors des périodes d'utilisation, pour éviter que le produit ne sèche à l'intérieur.

On connaît notamment par le brevet US 3,250,474 une tête de distribution comportant une buse pouvant être déplacée par rapport au corps de la tête de distribution. Ce dernier comporte un pointeau agencé pour s'engager dans l'orifice de distribution durant les périodes de non-utilisation.

Une telle tête de distribution est de fabrication relativement complexe.

En outre, pour des raisons de tenue mécanique, le pointeau ne peut être réalisé avec un diamètre trop petit et l'orifice de distribution présente ainsi un diamètre relativement grand ne permettant pas de distribuer le produit avec un faible débit.

La présente invention a pour objet une nouvelle tête de pulvérisation à fixer sur une tige de commande d'une valve ou d'une pompe, qui soit de construction relativement simple, et qui permette d'éviter que le produit contenu à l'intérieur ne sèche entre les périodes d'utilisation.

La tête de pulvérisation selon l'invention se caractérise par le fait qu'elle comporte un corps et un obturateur disposé dans un logement dudit corps, ce logement étant apte à communiquer avec une source de produit sous pression lors de l'utilisation, l'obturateur étant agencé pour prendre au repos une position d'obturation dans laquelle il repose par une partie tronconique contre une surface d'appui tronconique dudit corps et étant apte à s'écarter de cette surface d'appui sous l'effet de la pression du produit contenu dans ledit logement lors de la distribution du produit, pour former un orifice de distribution annulaire permettant de distribuer le produit sous la forme d'un spray conique et creux, au moins au voisinage de la tête, l'obturateur s'écartant de ladite surface d'appui à l'encontre d'une action de rappel élastique tendant à le ramener dans sa position d'obturation, lorsque la pression du produit diminue.

La tête de pulvérisation selon l'invention est de fabrication relativement simple et la fermeture de l'orifice de distribution s'effectue de manière automatique à la fin de la distribution du produit, sans que l'utilisateur ait à exercer une action spécifique sur la tête de distribution, à la différence de la tête de distribution décrite dans le brevet US 3,250,474 mentionné plus haut.

La largeur de l'orifice de distribution annulaire, lorsque le produit est distribué, est avantageusement inférieure à 0,1 mm.

L'orifice de distribution annulaire oppose ainsi une perte de charge relativement importante à l'écoulement du produit, ce qui permet de distribuer ce dernier avec un faible débit.

De plus, le spray obtenu est conique et creux, divergeant en éloignement de la tête de distribution.

Un tel spray peut s'avérer avantageux pour distribuer certains produits par rapport aux sprays conventionnels obtenus au moyen d'un orifice de distribution central de section circulaire.

Dans une réalisation particulière, l'action de rappel précitée est obtenue au moins en partie par la déformation élastique de la partie tronconique de l'obturateur qui peut être réalisée dans une matière élastomère au moins à sa partie périphérique.

Dans une autre réalisation particulière, l'action de rappel précitée est obtenue au moins en partie par la déformation d'un tronçon élastique qui relie la partie tronconique de l'obturateur à une partie servant à la fixation de l'obturateur sur le corps de la tête de distribution.

Dans une réalisation particulière, l'obturateur comporte une enveloppe réalisée dans une matière élastomère et un noyau central réalisé dans une matière plastique rigide.

Avantageusement, le noyau central assure la fixation de l'enveloppe sur le corps de la tête de distribution, par serrage de l'enveloppe dans un renfoncement du logement dans lequel est disposé l'obturateur.

De préférence, l'enveloppe comporte des reliefs coopérant avec des reliefs complémentaires du corps de la tête de distribution pour assurer la fixation de l'obturateur.

Dans une autre réalisation particulière, la partie tronconique de l'obturateur est réalisée dans une matière plastique rigide.

Avantageusement, cette partie tronconique est solidaire d'une tige comportant un tronçon en un matériau élastomère.

De préférence, la tige comporte en outre un tronçon en une matière plastique rigide et elle est avantageusement fixée au corps de la tête de distribution par ce tronçon en matière plastique rigide.

L'invention a encore pour objet un récipient équipé d'une telle tête de pulvérisation, notamment un récipient aérosol.

D'autres caractéristiques et avantages de la présente invention ressortiront à la lecture de la description détaillée qui va suivre, d'exemples de réalisation non limitatifs, et à l'examen du dessin annexé sur lequel :
- la figure 1 est une vue schématique en coupe axiale d'une tête de distribution conforme à un premier exemple de mise en oeuvre de l'invention,
- la figure 2 représente un détail de réalisation de la figure 1,
- la figure 3 représente l'obturateur lors de la distribution du produit,
- la figure 4 est une vue schématique en coupe axiale d'une tête de distribution conforme à un deuxième exemple de mise en oeuvre de l'invention, l'obturateur étant dans sa position d'obturation,
- la figure 5 est une vue analogue à la figure 4, représentant l'obturateur lors de la distribution du produit, et
- la figure 6 est une vue partielle à échelle agrandie de la figure 5.

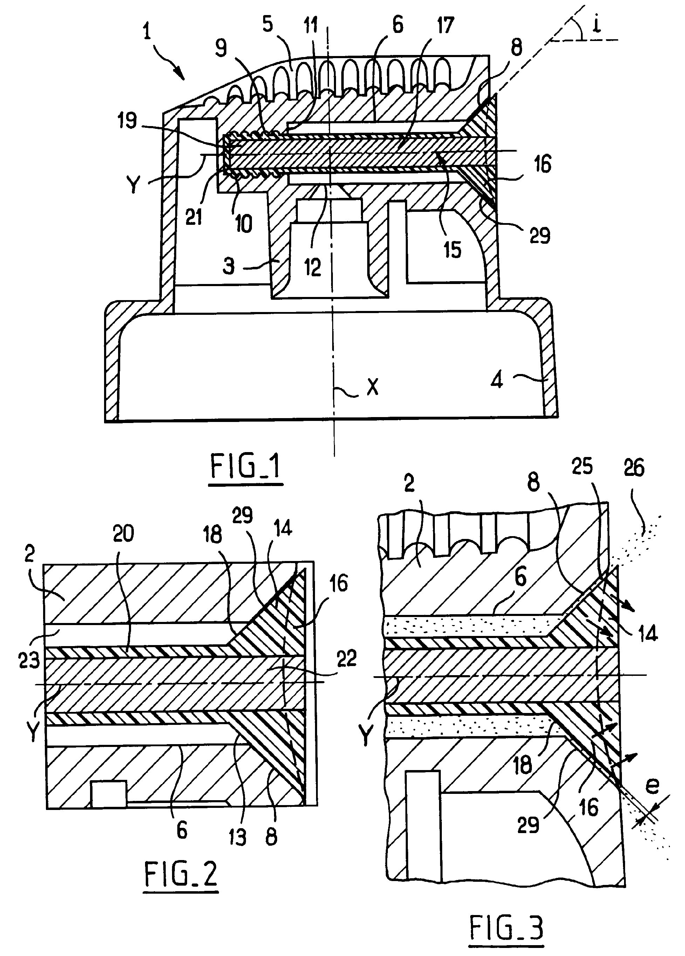

La tête de distribution 1 représentée sur la figure 1 comporte un corps 2 pourvu d'un embout 3 destiné à son montage sur la tige de commande d'une valve ou d'une pompe, non représentée, équipant un récipient contenant un liquide à pulvériser, tel que par exemple une laque capillaire.

Le corps 2 comporte en partie inférieure une jupe tubulaire 4 destinée à améliorer l'esthétique du récipient coiffé par la tête de distribution 1.

L'embout 3 est symétrique de révolution d'axe X.

La tête de distribution 1 comporte sur sa face supérieure un renfoncement 5 constituant une surface d'appui pour le doigt de l'utilisateur appuyant sur la tête de distribution afin de pulvériser le produit.

Le corps 2 comporte un logement 6 d'axe Y perpendiculaire à l'axe X.

Ce logement 6 débouche sur la face avant du corps 2 par une embouchure conique 8 divergeant vers l'extérieur.

L'embout 3 communique avec le logement 6 par un orifice 12.

Le logement 6 comporte, à l'opposé de son embouchure 8, un épaulement 11 délimitant vers l'avant un renfoncement 9 pourvu d'une succession d'annelures 10, dont la fonction sera expliquée plus loin.

Un obturateur 15 est fixé sur le corps 2 de la tête de distribution.

Cet obturateur 15 présente une forme allongée symétrique de révolution selon l'axe Y, et se compose d'une tige 17 sensiblement cylindrique prolongée à l'avant par une tête d'obturation tronconique 16.

L'extrémité arrière 19 de la tige 17 est fixée dans le renfoncement 9.

L'obturateur 15 comporte une enveloppe extérieure 20 réalisée dans un matériau élastomère.

Cette enveloppe 20 est évidée intérieurement depuis la face avant de la tête d'obturation 16 jusqu'à proximité de la face d'extrémité arrière de la tige 17.

Cet évidemment permet la mise en place à l'intérieur de l'enveloppe 20 d'un noyau central 22, cylindrique de révolution autour de l'axe Y, réalisé dans une matière plastique rigide.

La tête d'obturation 16 se compose ainsi d'une partie annulaire périphérique 14 en matériau élastomère, constituée par l'extrémité avant de l'enveloppe 20, et d'une partie centrale en matière plastique rigide constituée par l'extrémité avant du noyau central 22.

Un espace annulaire 23 est ménagé autour de la tige 17 dans le logement 6.

Ainsi, la région annulaire 13 de la face arrière 18 de la tête d'obturation 16 adjacente à la tige 17 ne repose pas contre la surface d'appui tronconique 29 délimitant l'embouchure 8, formant siège, et la pression du produit contenu dans le logement 6 peut s'appliquer directement sur cette région annulaire 13.

La tige 17 vient en appui, par sa face d'extrémité arrière, dans le fond 21 du renfoncement 9 et comporte sur sa partie engagée dans le renfoncement 9 des nervures annulaires coopérant avec les annelures 10 précitées, afin d'ancrer la tige 17 dans le renfoncement 9.

L'enveloppe 20 dépourvue du noyau central 22 peut être mise en place aisément dans le logement 6 de l'obturateur 15, en étant introduite par l'avant du logement 6.

Ensuite, l'insertion du noyau central 22 assure le serrage de l'enveloppe 20 dans le renfoncement 9.

Au repos, la tête d'obturation 16 repose par sa face arrière 18 contre la surface d'appui tronconique 29 et ferme de manière étanche le logement 6, comme on peut le voir sur les figures 1 et 2.

Lorsque l'utilisateur appuie sur la tête de distribution 1 et provoque l'enfoncement de la tige de commande sur laquelle est monté l'embout 3, le produit arrive sous pression en circulant dans un canal de la tige de commande dans le logement 6 et exerce une contrainte axiale vers l'avant sur la tête d'obturation 16, laquelle tend alors à s'écarter de la surface d'appui tronconique 29, comme représenté sur la figure 3.

La pression du produit sur la région annulaire 13 de la face arrière 18 de la tête d'obturation 16 provoque la déformation de l'enveloppe 20 et l'apparition entre la tête d'obturation 16 et le corps 2 de la tête de distribution d'un jeu annulaire de largeur e très faible, de l'ordre de quelques centièmes de millimètres dans l'exemple décrit, mais suffisante pour permettre la formation d'un orifice de distribution annulaire 25, par lequel le produit peut être distribué sous la forme d'une nappe conique 26 divergeant en éloignement de la tête de distribution 16.

L'angle i que fait la surface conique 18 avec l'axe Y est choisi en fonction du type d'application souhaité.

Pour pulvériser un déodorant par exemple, on peut choisir l'angle i compris entre 10 et 20°.

Pour pulvériser une laque par exemple et obtenir un spray large, on peut choisir l'angle i compris entre 15 et 40°.

Pour pulvériser un produit sur le corps, on peut choisir l'angle i encore plus grand, compris entre 40 et 60° par exemple.

Pour un produit donné, on peut modifier le débit en jouant sur la pression du produit et la dureté de l'élastomère.

Lorsque l'utilisateur cesse d'appuyer sur la tête de distribution 1, la tête d'obturation 16 retourne d'elle-même dans sa configuration initiale et ferme de manière étanche le logement 6.

Ce retour de la tête d'obturation 16 est dû à l'élasticité du matériau dans lequel est réalisée l'enveloppe 20.

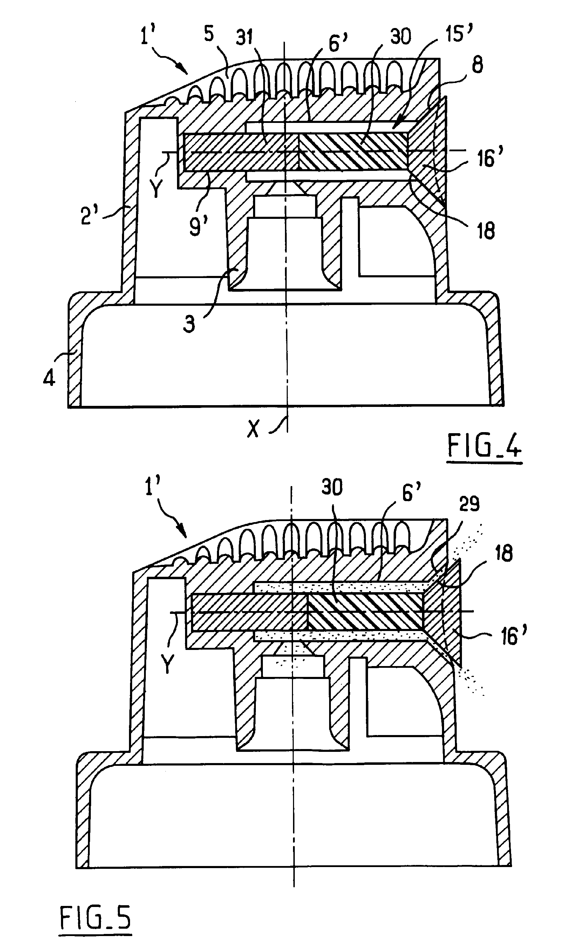

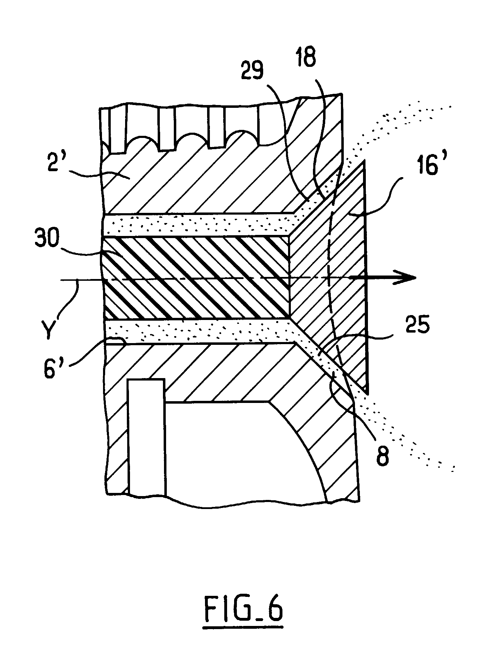

On a représenté sur les figures 4 à 6 une tête de distribution 1' conforme à une variante de mise en oeuvre de l'invention.

Cette tête de distribution 1' comporte des éléments constitutifs identiques à ceux précédemment décrits.

Ces éléments portent des références identiques sur les figures 4 à 6 et ne seront pas décrits à nouveau en détail.

La tête de distribution 1' comporte un corps 2' qui diffère du corps 2 précédemment décrit simplement par le fait que le renfoncement 9' du logement 6' est dépourvu d'annelures 10.

L'obturateur 15' diffère de l'obturateur 15 précédemment décrit par le fait que la tête d'obturation 16', qui présente la même forme que la tête d'obturation 16, est réalisée entièrement dans une matière plastique rigide et par le fait que la tige 17' de l'obturateur est constituée d'un tronçon élastique 30 réalisé dans une matière élastomère et d'un tronçon 31 réalisé dans la même matière plastique que la tête d'obturation 16'.

Le tronçon 31 constitue la partie arrière de la tige 17' et le tronçon élastique 30 relie ce tronçon 31 à la tête d'obturation 16'.

La forme de la tige 17' est la même que celle de la tige 17, à part l'absence sur le tronçon 30 engagé à force dans le renfoncement 9' de nervures annulaires.

La face arrière 18 de la tête d'obturation 16' s'applique au repos de manière étanche contre la surface d'appui tronconique 29.

Lorsque l'utilisateur appuie sur la tête de distribution 1' et que le produit contenu dans le logement 6' est sous pression, la pression du produit sur la face arrière 18 de la tête d'obturation 16' exerce une contrainte axiale selon l'axe Y qui tend à étirer le tronçon élastique 30.

La face arrière 18, en s'écartant de la surface d'appui tronconique 29, forme un orifice de distribution annulaire 25 qui permet la distribution du produit sous la forme d'une nappe conique, à l'instar de l'exemple de réalisation précédent.

Lorsque l'utilisateur relâche sa pression sur la tête de distribution 1', la tige de commande remonte et l'arrivée de produit sous pression dans le logement 6' cesse.

Le tronçon élastique 30 rappelle la tête d'obturation contre la surface formant siège du corps 2 et le logement 6' se trouve isolé de l'extérieur.

Le produit contenu à l'intérieur de la tête de distribution ne peut donc pas sécher.

Bien entendu, l'invention n'est pas limitée aux exemples de réalisation qui viennent d'être décrits.

On peut notamment modifier la forme de l'obturateur et celle du corps de la tête de distribution sans sortir du cadre de la présente invention.

On peut notamment utiliser d'autres configurations de la tige de l'obturateur ou de la tête d'obturation permettant d'assurer le retour de l'obturateur dans sa position d'obturation au repos.

## Revendications

1. Tête de pulvérisation à fixer sur une tige de commande d'une valve ou d'une pompe, caractérisée par le fait qu'elle comporte un corps (2 ; 2') et un obturateur (15 ; 15') disposé dans un logement (6 ; 6') dudit corps, ce logement étant apte à communiquer avec une source de produit sous pression lors de l'utilisation, l'obturateur étant agencé pour prendre au repos une position d'obturation dans laquelle il repose par une partie tronconique (16 ; 16') contre une surface d'appui tronconique (29) dudit corps et étant apte à s'écarter de cette surface d'appui (29) sous l'effet de la pression du produit contenu dans ledit logement (6 ; 6') lors de la distribution du produit, pour former un orifice de distribution annulaire (25) permettant de distribuer le produit sous la forme d'un spray conique et creux, au moins au voisinage de la tête, l'obturateur s'écartant de ladite surface d'appui (29) à l'encontre d'une action de rappel élastique tendant à le ramener dans sa position d'obturation, lorsque la pression du produit diminue.

2. Tête de pulvérisation selon la revendication précédente, caractérisée par le fait que ladite action de rappel est obtenue au moins en partie par la déformation élastique de la partie tronconique de l'obturateur.

3. Tête de pulvérisation selon revendication 2, caractérisée par le fait que la partie tronconique est réalisée au moins à sa partie périphérique (14) en une matière élastomère.

4. Tête de pulvérisation selon l'une quelconque des revendications précédentes, caractérisée par le fait que l'action de rappel est obtenue au moins en partie par la déformation d'un tronçon élastique (30) qui relie la partie tronconique de l'obturateur à une partie (31) servant à la fixation de l'obturateur sur le corps de la tête de distribution.

5. Tête de pulvérisation selon l'une quelconque des revendications précédentes, caractérisée par le fait que l'obturateur (15) comporte une enveloppe (20) réalisée dans un matériau élastomère et un noyau central (22) réalisé dans une matière plastique rigide.

6. Tête de pulvérisation selon la revendication 5, caractérisée par le fait que le noyau (22) assure la fixation de l'enveloppe sur le corps de la tête de distribution par serrage de l'enveloppe dans un renfoncement (9) du logement (6) dans lequel est déposé l'obturateur.

7. Tête de pulvérisation selon la revendication précédente, caractérisée par le fait que l'enveloppe (20) comporte des reliefs coopérant avec des reliefs complémentaires (10) du corps (2) pour assurer la fixation de l'obturateur.

8. Tête de pulvérisation selon la revendication 1, caractérisée par le fait que la partie tronconique (16') est réalisée dans une matière plastique rigide.

9. Tête de pulvérisation selon la revendication précédente, caractérisée par le fait que la partie tronconique (16') est solidaire d'une tige (17') comportant un tronçon (30) en un matériau élastomère.

10. Tête de pulvérisation selon la revendication précédente, caractérisée par le fait qu'elle comporte un tronçon (31) en une matière plastique rigide, la tige (17') étant fixée au corps de la tête de pulvérisation par ce tronçon (31) en matière plastique rigide.

11. Tête de pulvérisation selon l'une quelconque des revendications précédentes, caractérisée par le fait que la largeur (e) de l'orifice de distribution annulaire (25), lorsque le produit est distribué, est inférieure à 0,1 mm.

12. Récipient aérosol, caractérisé par le fait qu'il comporte une tête de pulvérisation telle que définie dans l'une quelconque des revendications précédentes.
